# EUROPÄISCHE PATENTANMELDUNG

(11) **EP 2 796 237 A1**
(43) Veröffentlichungstag der Anmeldung: **29.10.2014**
(21) Anmeldenummer: 13165336.2
(22) Anmeldetag: 25.04.2013
(51) Int. Cl.: B23K 20/02, B23P 6/00, B23K 31/02, F01D 5/00

(54) **Verfahren zur Wiederaufbearbeitung eines metallischen Bauteiles unter Verwendung des heißisostatischen Pressens von dem geschweißten metallischen Bauteil**

(71) Anmelder: Siemens Aktiengesellschaft, 80333 München (DE)
(72) Erfinder: Burbaum, Bernd, 14612 Falkensee (DE)

(57) **Zusammenfassung**

Durch das Überdecken einer Schweißstelle mit einem besser schweißbaren Material (16) können in einem heißisostatischen Pressverfahren gegebenenfalls vorhandene Risse in oder um die Schweißung (7) verschlossen werden, so dass auch schwer schweißbare Schweißmaterialien verwendet werden können.

## Beschreibung

Die Erfindung betrifft das heißisostatische Pressen von geschweißten metallischen Bauteilen.

Auftragsschweißverfahren oder Umschmelzverfahren werden oft verwendet, um Risse in metallischen Bauteilen zu verschließen.

Dies ist auch der Fall bei Turbinenschaufeln von Turbinenmaschinen, bei denen die Problematik besteht, dass das Basismaterial spröde ist, wie z.B. bei nickelbasierten Superlegierungen aufgrund ihres hohen und gewünschten γ'-Anteils für die Hochtemperatur-Verwendung, aber daher schwierig zu schweißen sind.

Beim Schweißen besteht die Gefahr, dass Heißrisse entstehen können.

Vielfach wird versucht dies durch aufwändige Aufwärmverfahren zu vermeiden.

Es ist daher Aufgabe der Erfindung ein Verfahren aufzuzeigen, bei dem ein geschweißtes Bauteil keine Risse mehr nach dem Schweißen aufweist.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

So entstehen vorteilhafter Weise Schweißstellen ohne Fehler.

Es zeigen:
- Figuren 1 bis 4: schematisch den Ablauf des erfindungsgemäßen Verfahrens,
- Figur 5: eine Liste von Superlegierungen.

Die Figuren und die Beschreibung stellen nur Ausführungsbeispiele der Erfindung dar.

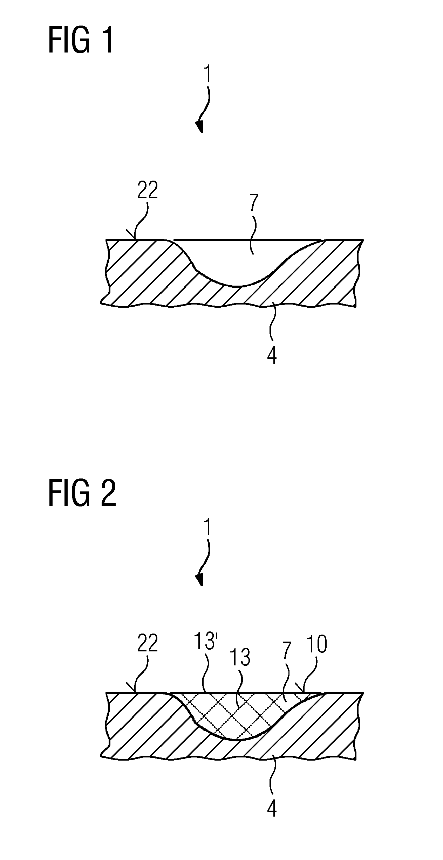

In Figur 1 ist ein Bauteil 1 aus einem Substrat 4 dargestellt, das an einer Stelle 7 einen Riss aufwies, der vorzugsweise entsprechend ausgearbeitet wurde.

Das Material des Substrats 4 ist metallisch und spröde und/oder schlecht schweißbar.

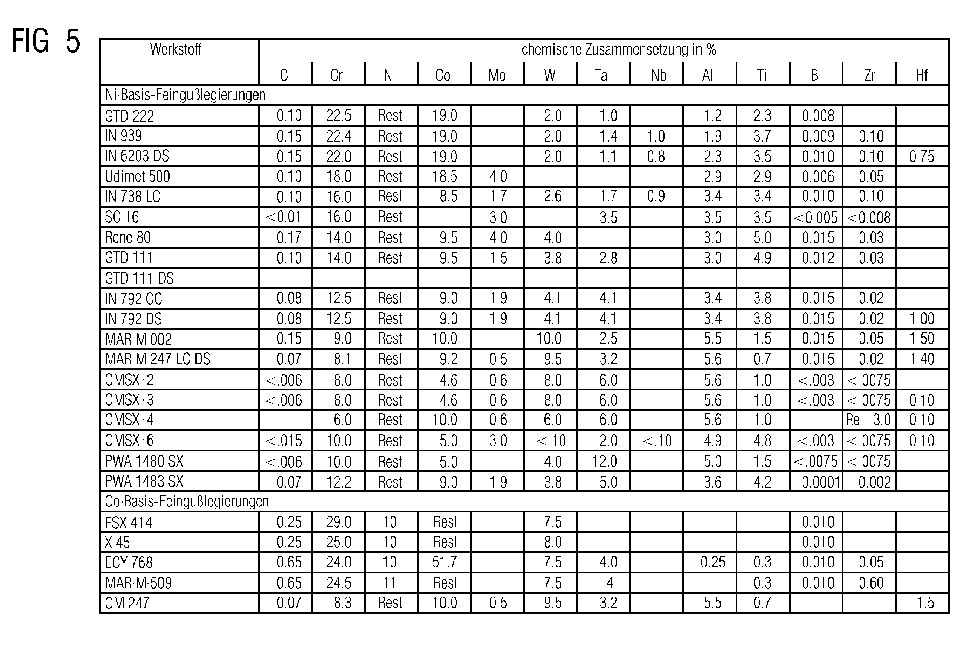

Bevorzugt ist es eine nickel- oder kobaltbasierte Superlegierung, insbesondere eine Legierung gemäß Figur 5.

In dieser ausgearbeiteten Stelle 7 wird Schweißmaterial 13 aufgetragen (Fig. 2), das dem Material des Substrats 4 entspricht oder ein artgleiches Material ist. Jedenfalls ist es ein Material mit ebenfalls hoher Sprödigkeit.

Bei nickelbasierten Superlegierungen als Schweißmaterial 13 ist der γ'-Anteil ebenfalls sehr hoch, aber höchstens 20 % kleiner als der maximal mögliche γ'-Anteil des Materials des Substrats 4.

Ebenso konnte die Oberfläche 22 des Substrats 4 einen Riss (nicht dargestellt) aufweisen, der nicht gemäß Figur 1 ausgearbeitet wird, sondern umgeschmolzen wird und dann die Schweißstelle 13' einen Umschmelzbereich darstellt (Figur 2).

Es kann nie ausgeschlossen werden, dass Risse zwischen der Schweißstelle 13' und dem Substrat 4 oder dem Umschmelzbereich entstanden sind, die an der Oberfläche 10 verlaufen oder unterhalb der Oberfläche 10 der Schweißstelle 13' und unter der Schweißstelle 13' verlaufen.

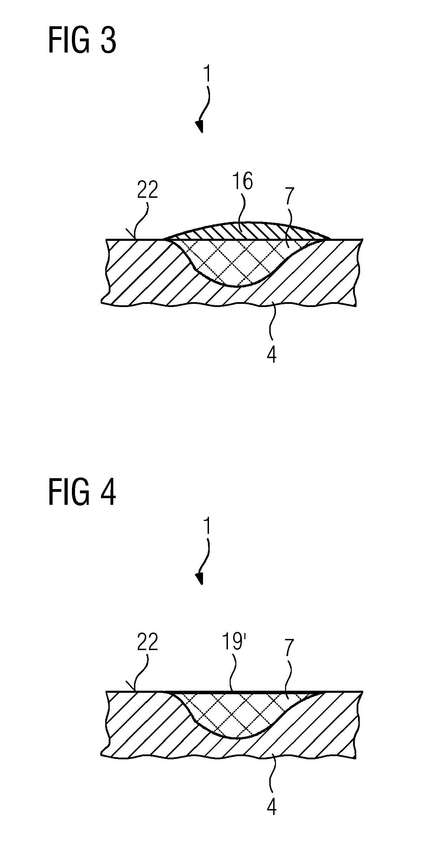

Daher wird in einem dritten Schritt gemäß Figur 3 ein zweites metallisches Material 16 vollständig über die Schweißstelle 13' aufgetragen.

Das zweite Material 16 weist einen im Vergleich zum Substrat 4 oder zum Schweißmaterial 13 deutlich niedrigen γ'-Anteil auf und/oder lässt sich daher gut schweißen, insbesondere entstehen keine Risse bei der Verwendung dieses zweiten Materials 16.

Der Unterschied im maximal möglichen γ'-Gehalt beträgt vorzugsweise mindestens 10%, insbesondere mindestens 20% im Vergleich zum Substrat 4 oder zum Schweißmaterial 13.

Dadurch ist die Schweißstelle 13 vollkommen gasdicht und vollständig abgedeckt und wird einem heißisostatischen Prozess (HIP) zugeführt.

Da das Material 16 gut schweißbar ist, ist es entsprechend auch plastisch deformierbar und wirkt als Kapselmaterial gegenüber der Schweißstelle 13', so dass die gegebenenfalls vorhandenen Risse in der Schweißstelle 13 oder zwischen Schweißstelle 13' und Substrat 4 geschlossen werden.

Dieser heißisostatische Prozess kann sich in die normale Bearbeitungskette eines Neubauteils oder wieder aufzuarbeitenden Bauteils anschließen.

In einem letzten Schritt nach dem heißisostatischen Pressen wird das Material 16 abgetragen und es ist eine Schweißung 19' vorhanden, die keine Risse oder keine Risse mehr aufweist.

Der γ'-Gehalt wird durch Wärmebehandlungen eingestellt und weist einen intrinsischen Maximalgehalt auf.

## Patentansprüche

1. Verfahren
zur Wiederaufbearbeitung eines metallischen Substrats (4), bei dem auf oder in eine Stelle (7) Schweißmaterial (13) aufgetragen wird oder
ein Riss umgeschmolzen wird, und
so jeweils eine Schweißstelle (13') erzeugt wird,
und dann über die Schweißstelle (13') ein zweites Material (16) aufgetragen wird,
das (16) die Schweißstelle (13') vollständig überdeckt, und in einem weiteren Schritt das Substrat (4) einer heißisostatischen Pressung (HIP) unterzogen wird und das zweite Material (16) nach dem heißisostatischen Pressen von dem Substrat (4) entfernt wird.

2. Verfahren nach Anspruch 1,
bei dem die Legierung des Substrats (4) spröde ist, insbesondere nickel- oder kobaltbasiert ist.

3. Verfahren nach einem der beiden Ansprüche 1 oder 2, bei dem das zweite Material (16) gut schweißbar ist und nicht spröde im Vergleich zur Legierung des Substrats (4) oder im Vergleich zum Schweißmaterial (13) ist.

4. Verfahren nach einem oder mehreren der folgenden Ansprüche 1 bis 3,
bei dem das Substrat (4) eine nickelbasierte Superlegierung mit hohem γ'-Anteil darstellt.

5. Verfahren nach Anspruch 4,
bei dem das Schweißmaterial (13) für die Schweißstelle (13') einen vergleichbar hohen γ'-Anteil im Vergleich zum Substratmaterial (4),
insbesondere den gleichen γ'-Anteil,
aufweist.

6. Verfahren nach einem oder beiden der Ansprüche 4 oder 5,
bei dem das zweite Material (16) gut schweißbar ist oder einen deutlich geringeren γ'-Anteil im Vergleich zum Material des Substrats (4) oder des Schweißmaterials (13), aufweist,
insbesondere um mindestens 10%,
ganz insbesondere um mindestens 20% kleiner ist.

7. Verfahren nach einem oder mehreren der Ansprüche 4, 5 oder 6,
bei dem das Schweißmaterial (13) im Vergleich zum Material des Substrats (4) einen kleineren maximal möglichen γ'-Anteil aufweist,
insbesondere aber höchstens 20%,
ganz insbesondere höchstens 10% kleiner.
